# EUROPEAN PATENT SPECIFICATION

(11) **EP 1 961 636 B1**
(45) Date of publication and mention of the grant of the patent: **24.04.2013**
(21) Application number: 08250552.0
(22) Date of filing: 18.02.2008
(51) Int. Cl.: B60T 11/16, B60T 11/18, B62L 3/04

(54) **Hydraulic master cylinder and vehicle provided with the same**
Hydraulischer Hauptzylinder und Fahrzeug damit
Cylindre maître hydraulique et véhicule doté de celui-ci

(30) Priority: 20.02.2007 JP 2007039119; 07.01.2008 JP 2008000821
(43) Date of publication of application: 27.08.2008
(73) Proprietor: Yamaha Hatsudoki Kabushiki Kaisha, Shizuoka-ken 438-8501 (JP)
(72) Inventor: Kondou, Hiroshi c/o Yamaha Hatsudoki Kabushiki Kaisha, Shizuoka-ken 438-8501 (JP)
(74) Representative: Moreland, David

(56) References cited:
- JP-A- 10 250 666
- JP-U- 3 034 983
- US-A1- 2003 014 970

## Description

### FIELD OF THE INVENTION

The present invention relates to a hydraulic master cylinder, and more particular, to a hydraulic master cylinder including a cylinder portion and a piston, and a vehicle provided with the same.

### BACKGROUND TO THE INVENTION

Vehicular brakes provided with a hydraulic master cylinder, which includes a cylinder portion and a piston are known, for example, from JP-2006-282001A. This document discloses a vehicular brake device comprising a body, a control piston inserted slidably relative to an inner peripheral surface of the body, an input piston inserted slidably relative to an inner peripheral surface of the control piston, and an input rod connected to a brake pedal to push a rear end of the input piston. With such a vehicular brake device, the control piston is provided with a flange portion which abuts against the body to inhibit rearward movement of the control piston relative to the body. Also, a retaining ring is provided at a rear end of the inner peripheral surface of the control piston to inhibit rearward movement of the input piston relative to the control piston. That is, the input piston is positioned relative to the control piston and the body but not positioned relative to the input rod.

However, the construction of the device in JP-A-2006-282001 has a disadvantage that a clearance is generated between the rear end of the input piston and the input rod since the input piston is positioned relative to the control piston and the body but not positioned relative to the input rod. Therefore, a problem is created in which it is necessary to perform an adjustment work of decreasing a clearance between the input piston and the input rod when the vehicular brake device is assembled.

JP03-34983 U shows a hydraulic master cylinder including a first chamber and a second chamber separated by a piston, the piston being provided with seals for preventing fluid transmission past the piston between the first and second chambers. A push member for engaging the piston is provided, the push member being adapted to move the piston to generate a hydraulic pressure in the first oil chamber. The apparatus is provided with a spring or clip adapted to bias the push member toward the piston.

JP10-250666 A describes a master cylinder for a bar handle vehicle, the master cylinder comprising a push rod, which is fixed between a brake leaver and a fluid pressure master cylinder. The fluid pressure master cylinder comprises a hollow interior in order to accommodate a liquid. A master piston is provided in the master cylinder, which accommodates a valve comprising a valve stem placed in a stem hole drilled in a cylinder axis of the master piston. A liquid pressure chamber is formed between the master piston and a rear end of the master cylinder.

When the master piston is in its backward limit position, the valve stem is pushed back towards the pressure chamber side. In this configuration, the head of the valve stem is separated from the stem hole and the liquid pressure chamber and the oil supply chamber are in communication via the stem hole.

If the master piston is activated so as to pressurize the pressure chamber then the valve stem becomes locked in the direction of the pressure chamber and the head of the valve stem blocks the stem hole such that oil transmission between the pressure chamber and the oil supply chamber is blocked.

US2003/0014970 A1 teaches of a master cylinder for a clutch or brake for a motor vehicle that comprises a housing for a reciprocal piston, one end of which receives a spherical head of a reciprocal piston rod. The master cylinder defines a plenum chamber for the reciprocal piston. The piston is snugly but reciprocally received in a cylindrical axial passage and can draw or permit the fluid flow from a source through an inlet or expel pressurized fluid by way of an outlet. The plenum chamber is sealed from the passage by two axially spacedapart annular sealing elements which flank the inlet.

One end portion of a push rod or piston rod has a spherical head extending into a complimentary socket in an adjacent end of the piston. A coupling means connects the head of the piston rod with the adjacent end of the piston so as to form an articulated linkage. This coupling means is constituted by a clip, which is made of metallic wire and permits the head to swivel in the complimentary socket of the piston. The material of the clip is resilient so that the clip can engage the head portion of the piston rod and/or the piston by snap action. The clip comprises a first section which is constituted by prong, which serves to urge the head of the piston rod against the socket of the piston.

The invention has been thought of in order to solve the problem described above and has its one object to provide a hydraulic master cylinder, in which an adjustment work of decreasing a clearance between a piston and a push member is unnecessary, and a vehicle provided with the same.

### SUMMARY OF THE INVENTION

In order to attain the object, a hydraulic master cylinder in a first aspect of the invention comprises a cylinder portion including a first oil chamber and a second oil chamber, a piston including a first oil passage portion connected to the first oil chamber and the second oil chamber of the cylinder portion, a push member, which abuts against the piston to move the piston to thereby generate a hydraulic pressure in the first oil chamber, and a first bias member, which biases the push member toward the piston to bring the push member into contact with the piston in the case where the piston is not moved at least nearly toward the first oil chamber.

With the hydraulic master cylinder in the first aspect, there is provided the first bias member, which biases the push member toward the piston to bring the push member into contact with the piston in the case where the piston is not moved at least nearly toward the first oil chamber as described above. With such construction, the first bias member biases the push member toward the piston in the case where the piston is not moved at least nearly toward the first oil chamber. Thereby, it is possible to maintain the push member in a state of contact with the piston. Consequently, it is unnecessary to perform an adjustment work of removing a clearance between the push member and the piston when the hydraulic master cylinder is assembled.

In the hydraulic master cylinder in the first aspect, a support member, which supports the first bias member, may be further provided and fixed to the cylinder portion. With such construction, the first bias member can bias the push member toward the piston in a state, in which the first bias member is supported on the support member fixed to the cylinder portion, so that it is possible to stably bias the push member.

In this case, the first bias member may include a spring member, the push member includes a flange portion, which engages with the spring member, the support member includes a support portion, which supports the spring member, and the spring member is arranged between the support portion of the support member and the flange portion of the push member. With such construction, the spring member can bias the flange portion of the push member in a state, in which the spring member is biased against the support portion of the support member fixed to the cylinder portion, so that the bias of the spring member is made use of to thereby enable readily biasing the push member against an opposite side to the support member.

In the hydraulic master cylinder, in which the first bias member includes a spring member, the support member may define an insertion hole, into which the flange portion of the push member can be inserted. With such construction, it is possible to readily insert the flange portion of the push member into the insertion hole of the support member.

In this case, a first outside diameter of one end of the spring member may be formed to be smaller than an outside diameter of the flange portion of the push member, and a second outside diameter of the other end of the spring member may be formed to be larger than a hole diameter of the insertion hole of the support member. With such construction, it is possible to inhibit one end of the spring member from coming off the flange portion of the push member in a state, in which the one end of the spring member engages with the flange portion of the push member and it is possible to inhibit the other end of the spring member from coming off the insertion hole of the support member in a state, in which the other end of the spring member is arranged on the support member.

In the hydraulic master cylinder, in which the first bias member includes a spring member, the spring member may comprise a compression spring. With such construction, it is possible to further readily bias the push member against an opposite side to the support member in a state, in which the compression spring is arranged between the support portion of the support member and the flange portion of the push member.

In the hydraulic master cylinder, which further comprises the support member, there may be further provided a screw member, by which the support member is fixed to the cylinder portion, and the support member may comprise a holding plate having a mount hole, into which the screw member is inserted. With such construction, the holding plate can be readily fixed to the cylinder portion by the screw member.

In the hydraulic master cylinder in the first aspect, there may be further provided a second bias member provided in the first oil chamber of the cylinder portion to bias the piston toward the second oil chamber. The bias of the second bias member, by which the piston is biased toward the second oil chamber, may be larger than the bias of the first bias member, by which the push member is biased toward the piston. With such construction, in a state, in which the hydraulic master cylinder is not actuated, it is possible to inhibit the piston from moving toward the first oil chamber while the first bias member biases the push member so as to contact the same with the piston.

In the hydraulic master cylinder in the first aspect, there may be further provided a reservoir tank connected to the second oil chamber of the cylinder portion, and a cylindrical-shaped member including a second oil passage portion capable of flowing between the reservoir tank and the second oil chamber. The piston may be formed with a long or elongate hole portion extending in a direction, in which the piston is moved, and having the cylindrical-shaped member inserted thereinto, and one side of the long hole portion abuts against the cylindrical-shaped member in the case where the piston is not moved nearly toward the first oil chamber. With such construction, in the case where the piston is not moved toward the first oil chamber, one side of the long hole portion of the piston and the cylindrical-shaped member abut against each other to enable readily arranging the piston in a predetermined position.

In the hydraulic master cylinder in the first aspect, there may be further provided a valve member provided on the first oil passage portion of the piston to close a side of the first oil passage portion toward the first oil chamber in the case where the piston is moved toward the first oil chamber, and a third bias member, which biases the valve member toward the second oil chamber so as to cause the valve member to close a side of the first oil passage portion toward the first oil chamber in the case where the piston is moved toward the first oil chamber. With such construction, in the case where the piston is moved toward the first oil chamber, the valve member and the third bias member can readily close the first oil passage portion.

In this case, there may be further provided a reservoir tank connected to the second oil chamber of the cylinder portion, and a cylindrical-shaped member provided in the second oil chamber of the cylinder portion and including a second oil passage portion capable of flowing between the reservoir tank and the second oil chamber, and the valve member may include an abutting portion, which abuts against the cylindrical-shaped member in the case where the piston is not moved nearly toward the first oil chamber and in the case where the push member contacts with the piston, and is constructed so as not to close a side of the first oil passage portion toward the first oil chamber. With such construction, in a state, in which the piston is not moved toward the first oil chamber, the first oil passage portion can be put in an opened state, so that oil in the first oil chamber, oil in the second oil chamber, and oil in the reservoir tank can be caused to flow.

In the hydraulic master cylinder in the first aspect, the cylinder portion may include a first oil passage port connecting between the first oil chamber of the cylinder portion and a braking portion, and a second oil passage port connecting between the second oil chamber of the cylinder portion and a reservoir tank, and there may be further provided a first filter provided on the first oil passage port, and a second filter provided on the second oil passage port. With such construction, it is possible to prevent foreign matters from invading the cylinder portion from the braking portion and the reservoir tank, so that it is possible to suppress a decrease in hydraulic pressure in the piston provided in the cylinder portion.

In this case, the braking portion may be connected to the first oil passage port, on which the first filter is provided, through a braking force control unit, which ensures steerability at the time of quick braking. With such construction, the first filter can prevent foreign matters from invading the cylinder portion, so that it is possible to prevent foreign matters in the braking force control unit and the braking portion from invading the cylinder portion.

The hydraulic master cylinder in the first aspect may be used in controlling a brake of a vehicle, such as a motorcycle. When the hydraulic master cylinder in the first aspect is used in controlling a brake of a motorcycle, it is possible to obtain a brake of a motorcycle, in which it is unnecessary to perform an adjustment work of removing a clearance between the push member and the piston when the hydraulic master cylinder is assembled.

A vehicle according to a second aspect of the invention is provided with a hydraulic master cylinder having any one of the constructions described above. With such construction, it is possible to obtain a vehicle provided with the hydraulic master cylinder, in which it is unnecessary to perform an adjustment work of removing a clearance between the push member and the piston when the hydraulic master cylinder is assembled.

### BRIEF DESCRIPTION OF THE DRAWINGS

These and other aspects of the present invention will now be described, by way of example only, with reference to the accompanying drawings, in which:
Fig. 1 is a side view showing a whole construction of a motorcycle, on which a rear brake control hydraulic master cylinder according to a first embodiment of the invention is mounted;
Fig. 2 is a cross sectional view showing a state, in which a rear caliper is connected to the rear brake control hydraulic master cylinder according to the first embodiment of the invention;
Fig. 3 is a cross sectional view taken along the line 100-100 in Fig. 2;
Fig. 4 is a cross sectional view showing, in enlarged scale, a periphery of a center valve shown in Fig. 3;
Fig. 5 is a cross sectional view illustrating a brake operation making use of the rear brake control hydraulic master cylinder according to the first embodiment shown in Fig. 2;
Fig. 6 is a cross sectional view illustrating a brake operation making use of the rear brake control hydraulic master cylinder according to the first embodiment shown in Fig. 2;
Fig. 7 is a cross sectional view showing a state, in which a rear caliper is connected through an ABS unit to a rear brake control hydraulic master cylinder according to a second embodiment of the invention; and
Fig. 8 is a plan view showing a filter provided on the rear brake control hydraulic master cylinder according to the second embodiment of the invention.

### DETAILED DESCRIPTION OF THE DRAWINGS

### First embodiment

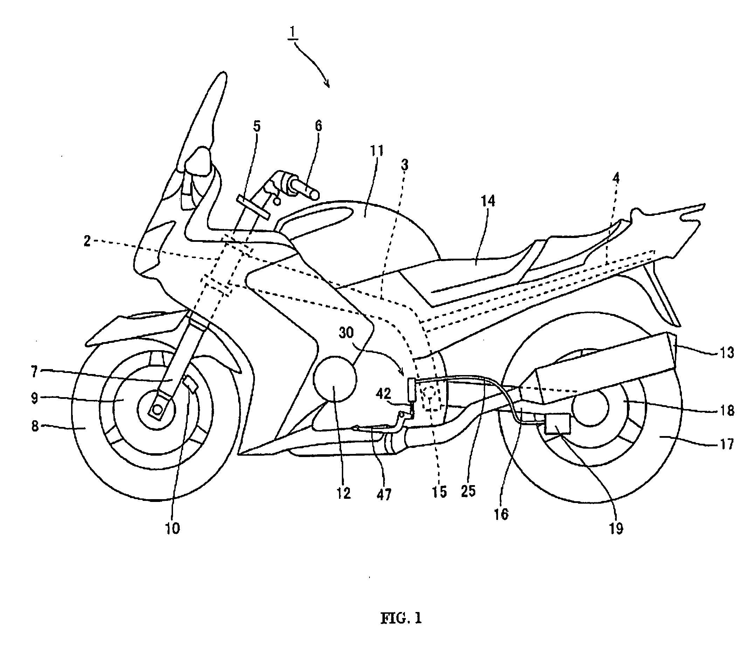

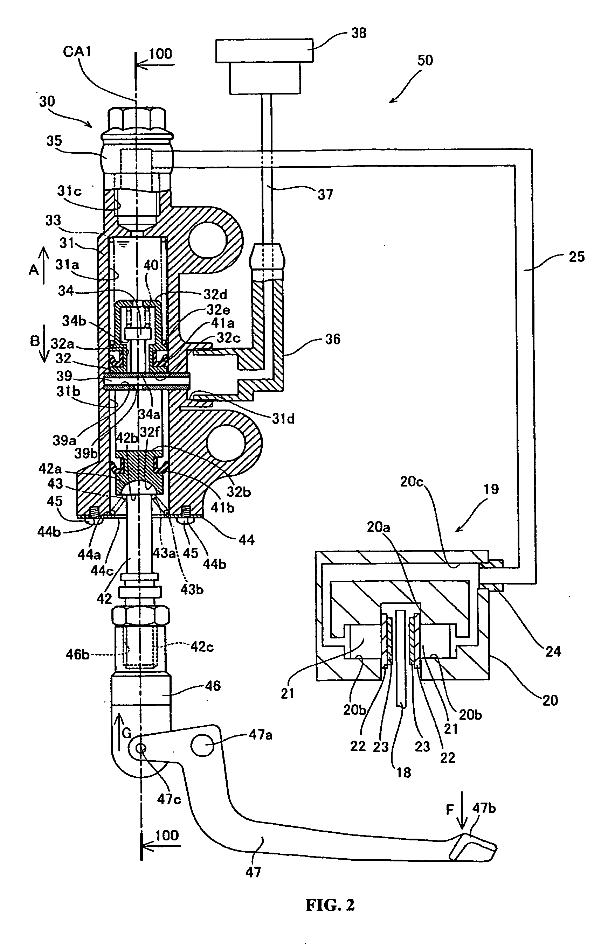

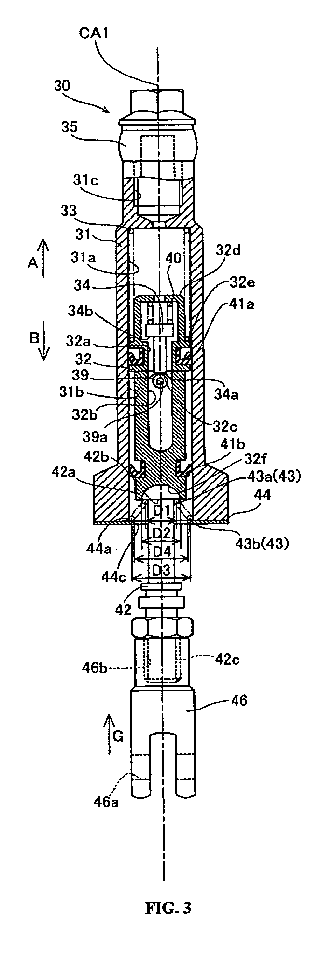

Fig. 1 is a side view showing a whole construction of a motorcycle, on which a rear brake control hydraulic master cylinder according to a first embodiment of the invention is mounted. Fig. 2 is a cross sectional view showing a state, in which a rear caliper is connected to the rear brake control hydraulic master cylinder according to the first embodiment of the invention. Fig. 3 is a cross sectional view taken along the line 100-100 in Fig. 2. First, referring to Figs. 1 to 3, an explanation will be given to a brake control hydraulic master cylinder 30 according to the first embodiment and the construction of a motorcycle 1, on which the brake control hydraulic master cylinder is mounted.

In the construction of the motorcycle 1, on which the rear brake control hydraulic master cylinder 30 according to the first embodiment of the invention is mounted, a front end of a main frame 3 is connected to a head pipe 2 as shown in Fig. 1. The main frame 3 is formed to extend rearwardly downward. Also, connected to the main frame 3 is a seat rail 4 extending rearwardly upward. Also, a steering mechanism 5 is mounted to the head pipe 2 to be able to turn. A handle 6 is mounted to an upper side of the steering mechanism 5. Also, a front fork 7 is mounted to a lower side of the steering mechanism 5. A front wheel 8 is mounted rotatably to a lower end of the front fork 7. A front disk rotor 9 is mounted to the front wheel 8 so as to rotate with the front wheel 8. A front caliper 10 is mounted to the front fork 7 in a manner to interpose the front disk rotor 9.

Also, a fuel tank 11 is arranged above the main frame 3. Also, an engine 12 is mounted below the main frame 3. A muffler 13 is connected to the engine 12. Also, a seat 14 is arranged above the seat rail 4. Also, a front end of a swing arm 16 is mounted to a rear end of the main frame 3 through a pivot shaft 15. A rear wheel 17 is mounted rotatably to a rear end of the swing arm 16. A rear disk rotor 18 is mounted to the rear wheel 17 so as to rotate with the rear wheel 17. Also, a rear caliper 19 is mounted to the swing arm 16 in a manner to interpose the rear disk rotor 18.

A detailed structure of the rear caliper 19 is such that a caliper body 20 is formed with a groove portion 20a as shown in Fig. 2. The rear disk rotor 18, which rotates together with the rear wheel 17 (see Fig. 1), is arranged inside the groove portion 20a of the caliper body 20. Also, a pair of cylinder portions 20b are formed inside the groove portion 20a of the caliper body 20 to face each other. Also, the caliper body 20 is formed with an oil passage port 20c, which is connected to each of the pair of cylinder portions 20b. Also, caliper pistons 21, respectively, are fitted into the pair of cylinder portions 20b of the caliper body 20. Brake pads 23 are mounted through mount plates 22 to sides of the pair of caliper pistons 21 toward the rear disk rotor 18. Also, a connector 24 is fitted into the oil passage port 20c of the caliper body 20 and one end of an oil hose 25 is mounted to the connector 24. Also, the rear brake control hydraulic master cylinder 30 is connected to the other end of the oil hose 25. The rear caliper 19 is an example of a "braking portion" of the invention.

Here, according to the first embodiment, the rear brake control hydraulic master cylinder 30 includes a master cylinder 31, a piston 32, a return spring 33, and a center valve 34. The master cylinder 31 is an example of a "cylinder portion" of the invention and the return spring 33 is an example of a "second bias member" of the invention. Also, the center valve 34 is an example of a "valve member" of the invention.

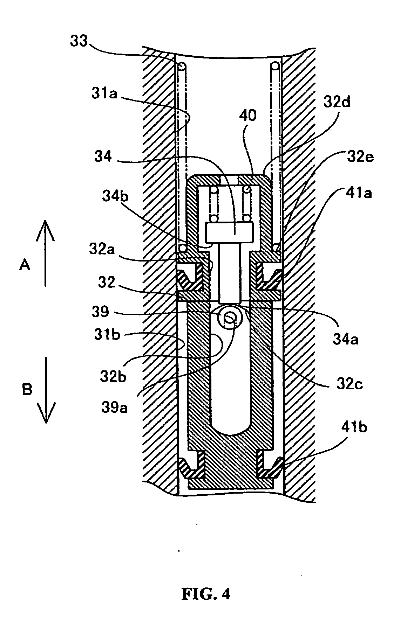

The piston 32 is fitted inside the master cylinder 31 to be movable in a direction (an arrow A direction or a arrow B direction) along a central axis CA1 of the master cylinder 31. Also, the piston 32 is formed with a piston oil passage portion 32a as shown in Figs. 2 and 4, the piston oil passage portion 32a being structured to connect between a first oil chamber 31a and a second oil chamber 31b. The piston oil passage portion 32a is an example of a "first oil passage portion" of the invention. Also, as shown in Fig. 2, the first oil chamber 31a is provided in a region of the piston oil passage portion 32a of the master cylinder 31 in the arrow A direction and the second oil chamber 31b is provided in a region of the piston oil passage portion 32a of the master cylinder 31 in the arrow B direction. Also, a push member 42, described later, pushes the piston 32 in the arrow A direction. Also, the return spring 33 is arranged in the first oil chamber 31a of the master cylinder 31. The return spring 33 biases the piston 32 toward the second oil chamber 31b (in the arrow B direction). Also, the center valve 34 is provided on a side of the piston oil passage portion 32a toward the first oil chamber 31a. The center valve 34 closes the side of the piston oil passage portion 32a toward the first oil chamber 31a in the case where the piston 32 is moved toward the first oil chamber 31a.

The master cylinder 31 is formed with two oil passage ports, that is, a first oil passage port 31c and a second oil passage port 31d. A connector 35 is fitted into a portion of the first oil passage port 31c in the arrow A direction. Also, the other end of the oil hose 25, which is connected at one end thereof to the connector 24 of the caliper body 20, is mounted to the connector 35. That is, the first oil passage port 31c is connected to the caliper body 20 of the rear caliper 19. Also, a portion of the first oil passage port 31c in the arrow B direction is connected to the first oil chamber 31a of the master cylinder 31. Thereby, the first oil chamber 31a is connected to the rear caliper 19, so that a hydraulic pressure in the first oil chamber 31a can be transmitted to the rear caliper 19.

A connector 36 is fitted into the second oil passage port 31d. A reservoir tank 38 is connected to the connector 36 through an oil hose 37. Also, connected to the second oil passage port 31d is a cylindrical-shaped member 39 formed with a hollow-shaped oil passage portion 39a. Specifically, the cylindrical-shaped member 39 is fitted into the second oil chamber 31b to be made perpendicular to the central axis CA1 of the master cylinder 31 (the second oil chamber 31b).

According to the first embodiment, the cylindrical-shaped member 39 functions to hold the piston 32, which is biased by the return spring 33 in the arrow B direction, in the case where the piston 32 is not moved substantially toward the first oil chamber 31a. As shown in Figs. 2 and 3, the piston 32 is formed with a long hole portion 32b extending in a direction (the arrow A direction and the arrow B direction), in which the piston 32 is moved, and the cylindrical-shaped member 39 is inserted into the long hole portion 32b and abuts against one side 32c of the long hole portion 32b. Also, as shown in Fig. 2, an oil passage hole 39b is provided on a side of the cylindrical-shaped member 39 to enable communication between the oil passage portion 39a and the second oil chamber 31b. That is, the cylindrical-shaped member 39 connects between the reservoir tank 38 and the second oil chamber 31b through the second oil passage port 31d, the connector 36, and the oil hose 37 in a manner to enable communication therebetween. The oil passage portion 39a and the oil passage hole 39b are an example of a "second oil passage portion" of the invention.

The reservoir tank 38 is provided to maintain the hydraulic pressure in the second oil chamber 31b of the master cylinder 31 at a predetermined hydraulic pressure. Specifically, in the case where the second oil chamber 31b of the master cylinder 31 becomes excessively high in hydraulic pressure, oil in the second oil chamber 31b is discharged into the reservoir tank 38. On the other hand, in the case where the second oil chamber 31b becomes excessively low in hydraulic pressure, the reservoir tank 38 replenishes the second oil chamber 31b with oil.

According to the first embodiment, a spring holding portion 32d is provided on one end side of the piston 32 to hold a compression spring 40. The compression spring 40 is an example of a "third bias member" of the invention. The compression spring 40 held on the spring holding portion 32d functions to bias the center valve 34 toward (in the arrow B direction) the second oil chamber 31b. Specifically, in the case where the piston 32 is moved toward the first oil chamber 31a, the center valve 34 is biased by the compression spring 40 in the arrow B direction to close the side of the piston oil passage portion 32a toward the first oil chamber 31a. Also, one end 34a of the center valve 34 abuts against the cylindrical-shaped member 39 in the case where the piston 32 is not moved substantially toward the first oil chamber 31a and the push member 42 described later contacts with the piston 32. That is, although the center valve 34 is biased toward the second oil chamber 31b (in the arrow B direction) by the compression spring 40, a seal portion 34b on the other end side of the center valve 34 does not close the side of the piston oil passage portion 32a toward the first oil chamber 31a. The one end 34a is an example of an "abutting portion" of the invention. Also, a second spring holding portion 32e is provided in the vicinity of an outer periphery of the spring holding portion 32d to hold the return spring 33. Also, a bearing portion 32f, into which a push portion 42a of the push member 42 described later is fitted, is formed on the other end side of the piston 32. The bearing portion 32f is formed to have a spherical-shaped concave surface. Also, a primary seal 41a is mounted to the second spring holding portion 32e of the piston 32 to have the function of sealing between the first oil chamber 31a and the second oil chamber 31b and a secondary seal 41b is mounted to the bearing portion 32f to have the function of inhibiting an oil from leaking outside the piston 32.

The push portion 42a of the push member 42 is fitted into the bearing portion 32f of the piston 32 in an abutting state. The push member 42 is provided to push the piston 32 in the arrow A direction to thereby move the piston 32 in the arrow A direction to generate a hydraulic pressure in the first oil chamber 31a of the master cylinder 31.

According to the first embodiment, a flange portion 42b extending in an outer peripheral direction of the push member 42 is formed in the vicinity of the push portion 42a of the push member 42. Also, one end 43a of a compression spring 43 engages with the flange portion 42b. Specifically, the compression spring 43 is arranged and interposed between a support portion 44a of a holding plate 44 described later and the flange portion 42b of the push member 42.

According to the first embodiment, the compression spring 43 functions to bias the push member 42 toward (in the arrow A direction) the piston 32. Also, the compression spring 43 functions to bring the push portion 42a of the push member 42 into contact with the bearing portion 32f of the piston 32 in the case where the piston 32 is not moved at least substantially toward the first oil chamber 31a. Also, that bias, with which the compression spring 43 biases the push member 42 in the arrow A direction, is smaller than that, with which the return spring 33 biases the piston 32 in the arrow B direction. That is, the compression spring 43 inhibits the piston 32 from moving substantially toward the first oil chamber 31a in a state, in which the master cylinder 31 is not actuated. The compression spring 43 is an example of a "first bias member" and a "spring member" of the invention.

According to the first embodiment, a diameter D1 (see Fig. 3) of the one end 43a of the compression spring 43 is smaller than a diameter D2 (see Fig. 3) of an outer periphery of the flange portion 42b of the push member 42. The diameter D1 is an example of a "first outside diameter" of the invention and the diameter D2 is an example of an "outside diameter of flange portion" of the invention.

According to the first embodiment, the other end 43b of the compression spring 43 is supported on the support portion 44a of the holding plate 44. The holding plate 44 is an example of a "support member" of the invention. Mount holes 44b, respectively, into which two screw members 45 are inserted, are provided on the holding plate 44, the holding plate 44 being fixed by the two screw members 45 in a manner to cover a side of the master cylinder 31 in the arrow B direction. Also, the holding plate 44 is formed with an insertion hole portion 44c, into which the flange portion 42b of the push member 42 can be inserted. That is, the holding plate 44 is structured so that the push member 42 including the flange portion 42b having a larger diameter than that of a shaft portion of the push member 42 can be readily inserted into the insertion hole portion 44c. The insertion hole portion 44c is an example of an "insertion hole" of the invention. Also, a diameter D3 (see Fig. 3) of the other end 43b of the compression spring 43 is larger than a hole diameter D4 (see Fig. 3) of the insertion hole portion 44c of the holding plate 44. The diameter D3 is an example of a "second outside diameter" of the invention.

According to the first embodiment, the compression spring 43 is formed so that the diameter D3 (see Fig. 3) of the other end 43b thereof is larger than the diameter D1 (see Fig. 3) of the one end 43a thereof. The compression spring 43 is formed to enable expanding so that when the compression spring 43 is inserted from a side of the push portion 42a of the push member 42 to be assembled, the diameter D1 (see Fig. 3) of the other end 43a becomes larger than the diameter D2 (see Fig. 3) of the outer periphery of the flange portion 42b.

One end side (in the arrow A direction) of a connecting member 46 is mounted to an opposite side (in the arrow B direction) of the push member 42 to the push portion 42a. As shown in Figs. 1 and 2, a foot lever 47 is mounted pivotally to a connection 46a (see Fig. 3) in the vicinity of the other end (in the arrow B direction) of the connecting member 46. Specifically, as shown in Fig. 2, the foot lever 47 is provided with a turning or pivot center 47a and as a foot lever portion 47b is pushed in an arrow F direction, the foot lever portion 47b turns about the turning center 47a, an acting portion 47c is moved in an arrow G direction, and the push member 42 is moved in the arrow A direction. In addition, a rear brake 50 is formed from the rear caliper 19, the brake control hydraulic master cylinder 30, and the foot lever 47. The rear brake 50 is an example of a "brake" of the invention. Also, an adjustment screw portion 42c and a screw hole portion 46b, respectively, are provided on a connection between the push member 42 and the connecting member 46. The adjustment screw portion 42c and the screw hole portion 46b are provided for adjustment so as to make a position of the connection 46a of the connecting member 46 and a position of the acting portion 47c of the foot lever 47 agree with each other.

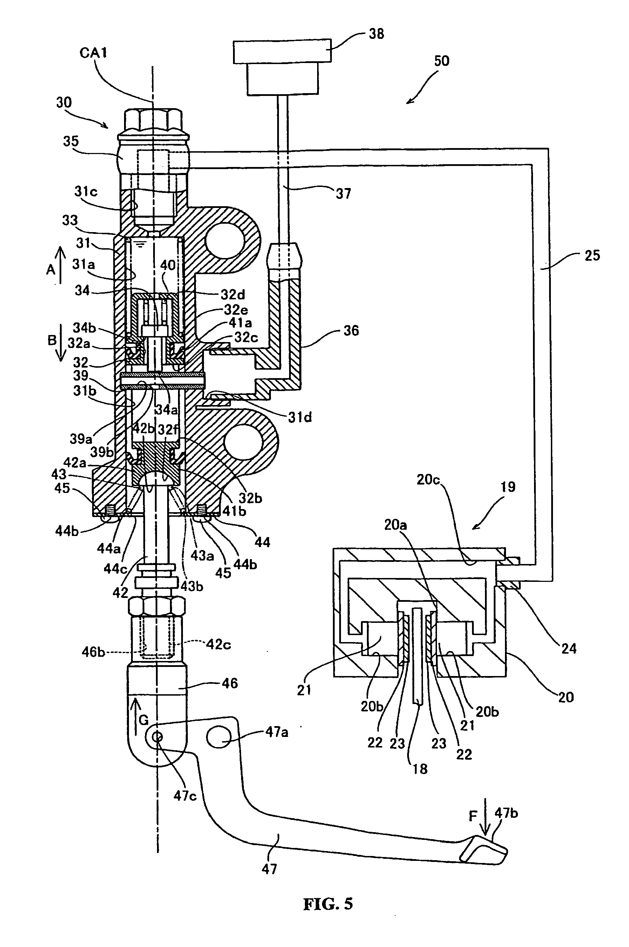

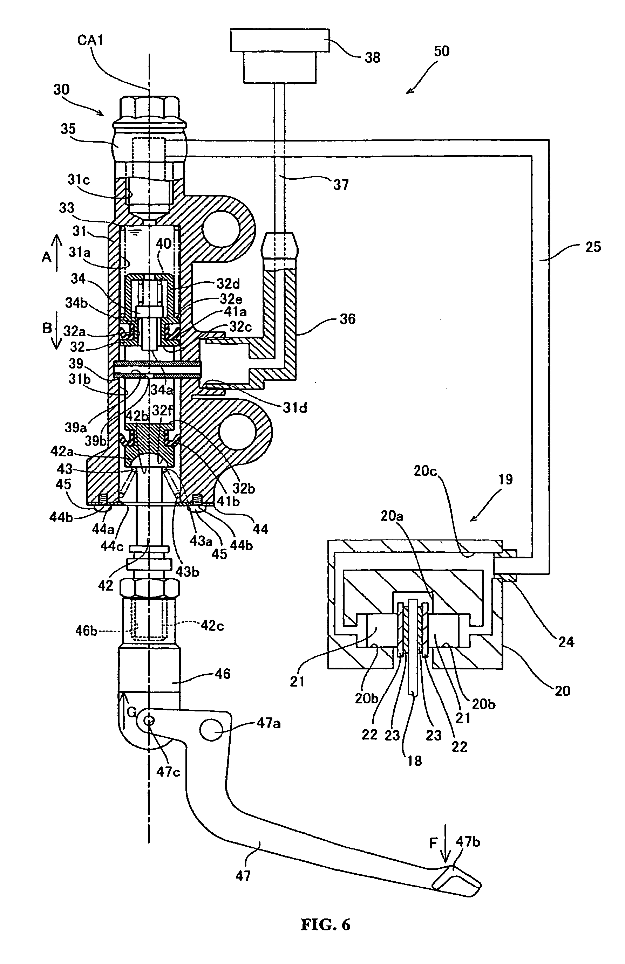

Figs. 5 and 6 are cross sectional views illustrating a brake operation making use of the rear brake control hydraulic master cylinder according to the first embodiment shown in Fig. 2. Subsequently, referring to Figs. 2, 5, and 6, an explanation will be given to a brake operation making use of the rear brake control hydraulic master cylinder 30 according to the first embodiment.

First, the foot lever portion 47b of the foot lever 47 is manipulated in the arrow F direction from a state shown in Fig. 2. Thereby, the push member 42 is moved in the arrow A direction while pushing the piston 32 in the arrow A direction in a state, in which the push portion 42a is fitted into the bearing portion 32f of the piston 32. At this time, the one side 32c of the long hole portion 32b of the piston 32 having abutted against the cylindrical-shaped member 39 separates from the cylindrical-shaped member 39. In addition, at this time, since the push portion 42a of the push member 42 has been caused by the compression spring 43 to contact with the bearing portion 32f of the piston 32 before the foot lever 47 was manipulated, it can move the piston 32 in the arrow A direction by a travel being substantially the same as a travel, over which the push member 42 is moved in the arrow A direction.

Since the center valve 34 is biased by the compression spring 40 in the arrow B direction as shown in Fig. 5, it is moved relative to the long hole portion 32b of the piston 32 while the one end 34a of the center valve 34 abuts against the cylindrical-shaped member 39, and the side of the piston oil passage portion 32a toward the first oil chamber 31a is closed by the seal portion 34b of the center valve 34. Thereby, since oil in the first oil chamber 31a is inhibited as shown in Fig. 6 from moving toward the second oil chamber 31b, it is possible to heighten or increase a hydraulic pressure in the first oil chamber 31a.

The hydraulic pressure in the first oil chamber 31a of the master cylinder 31 is increased whereby the oil in the first oil chamber 31a flows into the cylinder portions 20b of the caliper body 20 through the connector 35 connected to the first oil passage port 31c and the oil hose 25. Thereby, since a hydraulic pressure in the cylinder portions 20b is increased, each of the pair of caliper pistons 21 is moved toward the rear disk rotor 18. Thereby, the rear disk rotor 18 is put in a state of being interposed between the pair of brake pads 23. Accordingly, a frictional force is generated between the rear disk rotor 18 and the brake pads 23, so that rotation of the rear disk rotor 18 is stopped. Consequently, rotation of the rear wheel 17 (see Fig. 1), which rotates together with the rear disk rotor 18, is also stopped.

According to the first embodiment, as described above, the compression spring 43 is provided to bring the push member 42 into contact with the piston 32 in the case where the piston 32 is not moved substantially toward the first oil chamber 31a, whereby the compression spring 43 biases the push member 42 toward (in the arrow A direction) the piston 32 to enable maintaining the push member 42 in contact with the piston 32. Thereby, since it is unnecessary to regulate a clearance between the push member 42 and the piston 32 to a small extent when the brake control hydraulic master cylinder 30 is assembled, it is possible to achieve an improvement in workability at the time of assembly.

According to the first embodiment, by arranging the compression spring 43 between the support portion 44a of the holding plate 44 and the flange portion 42b of the push member 42, the flange portion 42b of the push member 42 can be biased by the compression spring 43 in a state, in which the compression spring 43 is biased against the support portion 44a of the holding plate 44 fixed to the master cylinder 31, so that the bias of the compression spring 43 is made use of to enable readily biasing the push member 42 to an opposite side (side in the arrow A direction) to the holding plate 44.

According to the first embodiment, by making the diameter D1 of the one end 43a of the compression spring 43 smaller than the diameter D2 of the outer periphery of the flange portion 42b of the push member 42, it is possible to inhibit the one end 43a of the compression spring 43 from coming off the flange portion 42b of the push member 42 in a state, in which the one end 43a of the compression spring 43 engages with the flange portion 42b of the push member 42. Also, by making the diameter D3 of the other end 43b of the compression spring 43 larger than the hole diameter D4 of the insertion hole portion 44c of the holding plate 44, it is possible to inhibit the other end 43b of the compression spring 43 from coming off into the insertion hole portion 44c of the holding plate 44 in a state, in which the other end 43b of the compression spring 43 is arranged on the holding plate 44.

### Second embodiment

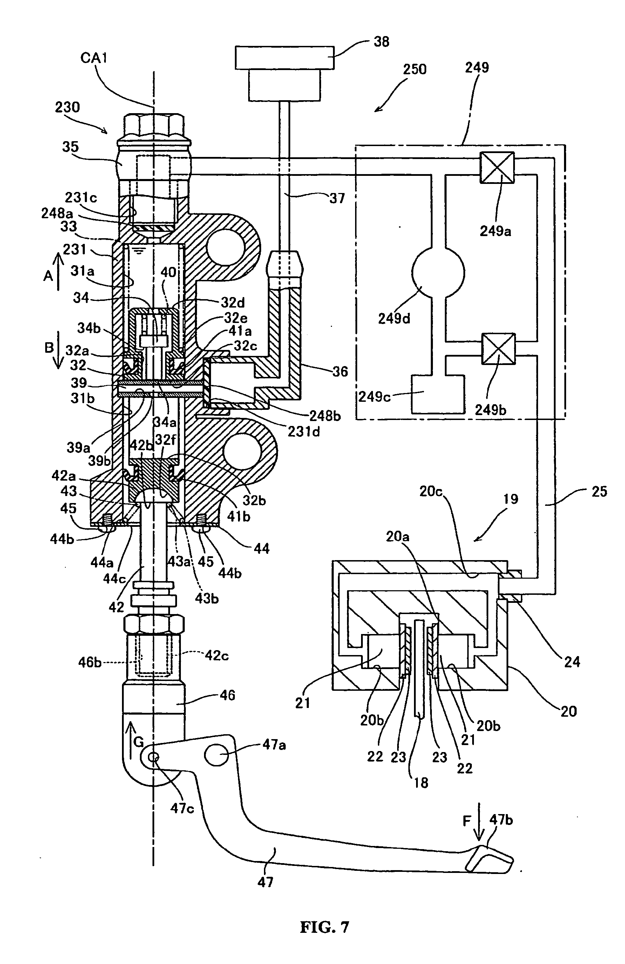

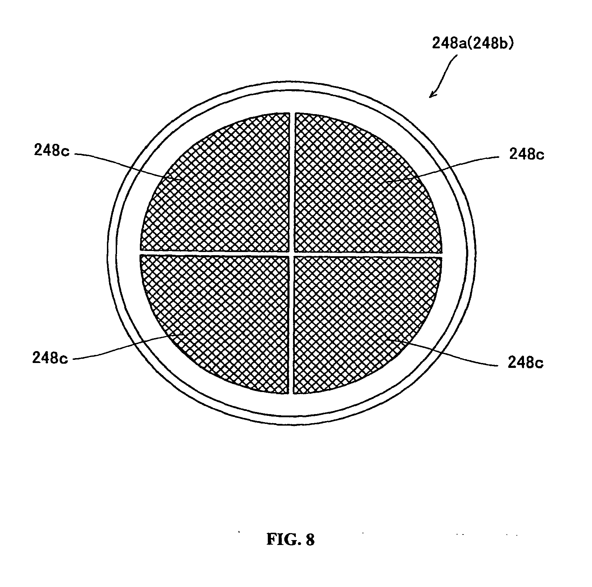

Fig. 7 is a cross sectional view showing a state, in which a rear caliper is connected through an ABS (Antilock Brake System) unit to a rear brake control hydraulic master cylinder according to a second embodiment of the invention. Fig. 8 is a plan view showing a filter provided on the rear brake control hydraulic master cylinder according to the second embodiment of the invention. Referring to Figs. 7 and 8, a detailed explanation will be given to the construction of the rear brake control hydraulic master cylinder according to the second embodiment of the invention. Unlike the first embodiment, the second embodiment will be described with respect to an example, in which a filter 248a and a filter 248b are provided in the rear brake control hydraulic master cylinder 230 and an ABS unit 249 is provided between the rear brake control hydraulic master cylinder 230 and a rear caliper 19.

Mounted to the rear brake control hydraulic master cylinder 230 according to the second embodiment of the invention are the filter 248a and the filter 248b, which serve to filter oil. Specifically, as shown in Fig. 7, the filter 248a is press fitted into a first oil passage port 231c of a master cylinder 231. Also, the filter 248b is press fitted into a second oil passage port 231d of the master cylinder 231. Also, as shown in Figs. 7 and 8, the filter 248a and the filter 248b are columnar in shape and formed from a nylon resin so that a portion 248c, through which an oil passes, defines a mesh structure. In this manner, by mounting the filter 248a and the filter 248b to those regions, into which an oil in the master cylinder 231 flows, it is possible to prevent foreign matters from invading the master cylinder 231 when a rear brake 250 is to be assembled.

According to the second embodiment of the invention, the ABS unit 249 serving to ensure steerability at the time of quick braking is provided between the first oil passage port 231c, on which the filter 248a is provided, and the rear caliper 19 as shown in Fig. 7. The ABS unit 249 is an example of a "braking force control unit" of the invention.

As shown in Fig. 7, the ABS unit 249 comprises a first control valve 249a, a second control valve 249b, a chamber 249c, a pump 249d, an ECU (Engine Control Unit) (not shown), and a rear-wheel speed sensor (not shown).

The ABS unit 249 functions to have the rear-wheel speed sensor (not shown) detecting a wheel speed of the rear wheel 17 and outputting its signal to the ECU (not shown). The ECU determines the presence of abnormality in rotation of the rear wheel 17 whereby the ABS unit 249 controls a braking force for the rear wheel 17.

Since the remaining construction of the second embodiment is the same as that of the first embodiment, a further explanation is omitted.

The ABS unit 249 operates such that the first control valve 249a is opened and the second control valve 249b is closed in a normal state. Thereby, a hydraulic pressure from the rear brake control hydraulic master cylinder 230 is transmitted to the rear caliper 19 through the first control valve 249a. Consequently, it becomes possible to apply a braking force to the rear wheel 17. On the other hand, at the time of quick braking as in the case where a driver brakes quickly, the rear brake control hydraulic master cylinder 230 applies an excessive hydraulic pressure to the rear caliper 19, so that the rear brake 250 applies an excessive braking force to the rear wheel 17 and so the rear wheel 17 is locked. The ECU (not shown) determines a signal output from the rear-wheel speed sensor (not shown) as being abnormal and outputs a signal whereby in the ABS unit 249, the first control valve 249a is closed and the second control valve 249b is opened. Thereby, a hydraulic pressure from the rear brake control hydraulic master cylinder 230 is cut off and an oil in the rear caliper 19 flows into the chamber 249c through the second control valve 249b, so that a hydraulic pressure in the rear caliper 19 is decreased. Consequently, a braking force from the rear brake 250 is moderated and locking of the rear wheel 17 is released. At this time, control is exercised to operate the pump 249d. The pump 249d functions to return oil in the chamber 249c to the rear brake control hydraulic master cylinder 230. That is, the pump 249d functions to further increase a pressure in the rear brake control hydraulic master cylinder 230. Thereby, the foot lever 47 is pushed back in an opposite direction to the arrow F direction. As described above, the ABS unit 249 releases locking of the rear wheel 17 to thereby enable controlling a braking force on the rear wheel 17.

According to the second embodiment, as described above, the filter 248a is press fitted into the first oil passage port 231c of the master cylinder 231 and the filter 248b is press fitted into the second oil passage port 231d of the master cylinder 231 whereby the filter 248a and the filter 248b can prevent foreign matters from invading the master cylinder 231, so that it is possible to prevent foreign matters from invading an interior of the master cylinder 231 from the rear caliper 19 and the reservoir tank 38. Consequently, foreign matters can be prevented from reaching a contact area between the center valve 34 and the piston oil passage portion 32a, so that it is possible to suppress that decrease in hydraulic pressure, which foreign matters are bitten in the contact area between the center valve 34 and the piston oil passage portion 32a to cause.

According to the second embodiment, the ABS unit 249 is provided between the first oil passage port 231c, on which the filter 248a is provided, and the rear caliper 19. Thereby, the filter 248a can prevent foreign matters from invading the master cylinder 231, so that it is possible to prevent foreign matters in the ABS unit 249 and the rear caliper 19 from invading the master cylinder 231.

Since the remaining effect of the second embodiment is the same as that of the first embodiment, a further explanation is omitted.

It should be thought that the embodiment disclosed herein is considered in all respects to be illustrative and not restrictive. The scope of the invention is indicated by the claims rather than the description of the embodiments, and all changes which come within the meaning and range of equivalence of the claims are intended to be embraced therein.

For example, while the embodiments show an example, in which the invention is applied to the hydraulic master cylinder to control driving of a rear brake (rear caliper), the invention is not limited thereto but applicable to a hydraulic master cylinder to control driving of other mechanisms than a rear brake. For example, the invention may be applied to a hydraulic master cylinder to control driving of a front brake (front caliper) and to a hydraulic master cylinder to control driving of a clutch.

Also, while the embodiments show an example, in which the compression spring is arranged between the support portion of the holding plate and the flange portion of the push member to bias the flange portion of the push member toward the piston, the invention is not limited thereto but a bias member, such as disc spring or leaf spring, other than a compression spring may be arranged to bias a flange portion of a push member toward a piston.

Also, while the embodiments show an example, in which a holding plate is used as an example of a support member of the invention, the invention is not limited thereto but a circlip, a washer, etc. may be used as a further example of a support member to support a compression spring.

Also, while the embodiments show a motorcycle as an example of a vehicle provided with a hydraulic master cylinder, the invention is not limited thereto but applicable to other vehicles such as three-wheeler, ATV (All-Terrain Vehicle), etc. as far as a hydraulic master cylinder is provided therein.

### Description of Reference Numerals and Signs

1: motorcycle
19: rear caliper (braking portion)
30, 230: rear brake control hydraulic master cylinder
   (hydraulic master cylinder)
31, 231: master cylinder (cylinder portion)
31a: first oil chamber
31b: second oil chamber
31c, 231c: first oil passage port
31d, 231d: second oil passage port
32: piston
32a: piston oil passage portion (first oil passage portion)
32b: elongate hole portion
32c: one side
33: return spring (second bias member)
34: center valve (valve member)
34a: one end (abutting portion)
38: reservoir tank
39: cylindrical-shaped member
39a: oil passage portion (second oil passage portion)
39b: oil passage hole (second oil passage portion)
40: compression spring (third bias member)
42: push member
42b: flange portion
43: compression spring (first bias member, spring member)
43a: one end
43b: other end
44: holding plate (support member)
44a: support portion
44b: mount hole
44c: insertion hole portion (insertion hole)
45: screw member
50, 250: rear brake (brake)
248a: filter
248b: filter
249: ABS unit (braking force control unit)
D1: diameter (first outside diameter)
D2: diameter (outside diameter)
D3: diameter (second outside diameter)
D4: hole diameter

## Claims

1. A hydraulic master cylinder (30) comprising:
a cylinder portion (31) including a first oil chamber (31a) and a second oil chamber (31b);
a piston (32) including a first oil passage portion (32a) connected to the first and second oil chambers (31a, 31b);
a push member (42) engaging the piston (32) and adapted to move said piston (32) to generate a hydraulic pressure in the first oil chamber (31a) ;
a first bias member (43) adapted to bias the push member (42) toward the piston (32) to bring the push member (42) into engagement with the piston (32); and
a support member (44) adapted to support the first bias member (43), wherein the support member (44) is fixed to the cylinder portion (31).

2. The hydraulic master cylinder (30) according to claim 1, wherein:
the first bias member (43) comprises a spring member;
the push member (42) includes a flange portion (42b) adapted to engage with the spring member;
the support member (44) includes a support portion (44a) adapted to support the spring member; and
the spring member is arranged between the support portion (44a) of the support member (44) and the flange portion (42b) of the push member (42).

3. The hydraulic master cylinder (30) according to claim 2, wherein the support member (44) defines an insertion hole (44c) adapted to receive the flange portion (42b) of the push member (42).

4. The hydraulic master cylinder (30) according to claim 3, wherein:
a first outside diameter (D1) of one end (43a) of the spring member is formed to be smaller than an outside diameter (D2) of the flange portion (42b) of the push member (42), and
a second outside diameter (D3) of the other end (43b) of the spring member is formed to be larger than a hole diameter (D4) of the insertion hole (44c) of the support member (44).

5. The hydraulic master cylinder (30) according to claim 2, 3 or 4, wherein the spring member comprises a compression spring.

6. The hydraulic master cylinder (30) according to any of the preceding claims, further comprising a screw member (45) adapted to secure the support member (44) to the cylinder portion (31), wherein the support member (44) comprises a holding plate defining a mount hole (44b) adapted to receive the screw member (45).

7. The hydraulic master cylinder (30) according to any preceding claim, further comprising a second bias member (33) mounted in the first oil chamber (31a) of the cylinder portion (31) and adapted to bias the piston (32) toward the second oil chamber (31b), wherein the bias of the second bias member (33) is larger than the bias of the first bias member (43).

8. An assembly comprising a hydraulic master cylinder (30) according to any preceding claim, and further comprising a reservoir tank (38) connected to the second oil chamber (31b) of the cylinder portion (31).

9. The assembly according to claim 8, wherein the hydraulic master cylinder (30) further comprises:
a cylindrical-shaped member (39) including a second oil passage portion (39a, 39b) enabling communication between the reservoir tank (38) and the second oil chamber (31b),
wherein the piston (32) is formed with an elongate hole portion (32b) adapted to accommodate the cylindrical-shaped member (39), and
one side of the elongate hole portion (32b) is adapted to engage the cylindrical-shaped member (39) when the piston (32) is not moved toward the first oil chamber (31a) of the cylinder portion (31).

10. An assembly according to claim 8 or 9 or an assembly comprising a hydraulic master cylinder (30) according to any of claims 1 to 7, wherein the hydraulic master cylinder (30) further comprises:
a valve member (34) mounted in the first oil passage portion (32a) of the piston (32) and adapted to close a side of the first oil passage portion (32a) toward the first oil chamber (31a) when the piston (32) is moved toward the first oil chamber (31a); and
a third bias member (40) adapted to bias the valve member (34) toward the second oil chamber (31b) so as to close a side of the first oil passage portion (32a) toward the first oil chamber (31a) when the piston (32) is moved toward the first oil chamber (31a).

11. An assembly according to claim 10 when dependant on claim 8, wherein the hydraulic master cylinder (30) further comprises:
a cylindrical-shaped member (39) provided in the second oil chamber (31b) of the cylinder portion (31) and including a second oil passage portion (39a, 39b) enabling communication between the reservoir tank (38) and the second oil chamber (31b), and
wherein the valve member (34) includes an abutting portion (34a) adapted to abut against the cylindrical-shaped member (39) when the piston (32) is not moved toward the first oil chamber (31a) and when the push member (42) engages the piston (32), and is constructed so as not to close a side of the first oil passage portion (32a) toward the first oil chamber (31a).

12. An assembly according to claim 8 or any of claims 9 to 11 when dependent on claim 8, wherein the assembly further comprises a braking portion (19) and the cylinder portion (31) of the hydraulic master cylinder (30) includes a first oil passage port (31c) connecting between the first oil chamber (31a) of the cylinder portion (31) and a braking portion (19), and a second oil passage port (31d) connecting between the second oil chamber (31b) of the cylinder potion (31) and the reservoir tank (38), and
further comprises:
a first filter (248a) provided on the first oil passage port (31c); and
a second filter (248b) provided on the second oil passage port (31d).

13. The assembly according to claim 12, wherein the braking portion (19) is connected to the first oil passage port (31c), on which the first filter (248a) is provided, through a braking force control unit (249) adapted to ensure steerability at the time of rapid braking.

14. The hydraulic master cylinder (30) according to any of claims 1 to 7 or the assembly according to any of claims 8 to 13, configured to control braking of a motorcycle (1).

15. A vehicle (1) comprising a hydraulic master cylinder (30) according to any of claims 1 to 7 or an assembly according to any of claims 8 to 13.

## Patentansprüche

1. Hydraulischer Hauptzylinder (30), der aufweist:
einen Zylinderabschnitt (31), der eine erste Ölkammer (31a) und eine zweite Ölkammer (31b) umfasst;
einen Kolben (32), der einen ersten Ölkanalabschnitt (32a) umfasst, der mit der ersten und zweiten Ölkammer (31a, 31b) verbunden ist;
ein Schubelement (42), das mit dem Kolben (32) in Eingriff kommt und ausgebildet ist, um den Kolben (32) zu bewegen, um einen hydraulischen Druck in der ersten Ölkammer (31a) zu erzeugen;
ein erstes Vorspannelement (43), das ausgebildet ist, um das Schubelement (42) in Richtung des Kolbens (32) vorzuspannen, um das Schubelement (42) mit dem Kolben (32) in Eingriff zu bringen; und
ein Trägerelement (44), das ausgebildet ist, um das erste Vorspannelement (43) zu tragen, wobei das Trägerelement (44) am Zylinderabschnitt (31) befestigt ist.

2. Hydraulischer Hauptzylinder (30) nach Anspruch 1, bei dem:
das erste Vorspannelement (43) ein Federelement aufweist;
das Schubelement (42) einen Flanschabschnitt (42b) umfasst, der ausgebildet ist, um mit dem Federelement in Eingriff zu kommen;
das Trägerelement (44) einen Trägerabschnitt (44a) umfasst, der ausgebildet ist, um das Federelement zu tragen; und
das Federelement zwischen dem Trägerabschnitt (44a) des Trägerelementes (44) und dem Flanschabschnitt (42b) des Schubelementes (42) angeordnet ist.

3. Hydraulischer Hauptzylinder (30) nach Anspruch 2, bei dem das Trägerelement (44) ein Einsetzloch (44c) definiert, das ausgebildet ist, um den Flanschabschnitt (42b) des Schubelementes (42) aufzunehmen.

4. Hydraulischer Hauptzylinder (30) nach Anspruch 3, bei dem:
ein erster Außendurchmesser (D1) des einen Endes (43a) des Federelementes kleiner ausgebildet ist als ein Außendurchmesser (D2) des Flanschabschnittes (42b) des Schubelementes (42); und
ein zweiter Außendurchmesser (D3) des anderen Endes (43b) des Federelementes größer ausgebildet ist als ein Lochdurchmesser (D4) des Einsetzloches (44c) des Trägerelementes (44).

5. Hydraulischer Hauptzylinder (30) nach Anspruch 2, 3 oder 4, bei dem das Federelement eine Druckfeder aufweist.

6. Hydraulischer Hauptzylinder (30) nach einem der vorhergehenden Ansprüche, der außerdem ein Schraubenelement (45) aufweist, das ausgebildet ist, um das Trägerelement (44) am Zylinderabschnitt (31) zu sichern, wobei das Trägerelement (44) eine Halteplatte aufweist, die ein Montageloch (44b) definiert, das ausgebildet ist, um das Schraubenelement (45) aufzunehmen.

7. Hydraulischer Hauptzylinder (30) nach einem der vorhergehenden Ansprüche, der außerdem ein zweites Vorspannelement (33) aufweist, das in der ersten Ölkammer (31a) des Zylinderabschnittes (31) montiert und ausgebildet ist, um den Kolben (32) in Richtung der zweiten Ölkammer (31b) vorzuspannen, wobei die Vorspannung des zweiten Vorspannelementes (33) größer ist als die Vorspannung des ersten Vorspannelementes (43).

8. Baugruppe, die einen hydraulischer Hauptzylinder (30) nach einem der vorhergehenden Ansprüche aufweist, und die außerdem einen Vorratsbehälter (38) aufweist, der mit der zweiten Ölkammer (31b) des Zylinderabschnittes (31) verbunden ist.

9. Baugruppe nach Anspruch 8, bei der der hydraulische Hauptzylinder (30) außerdem aufweist:
ein zylindrisch geformtes Element (39), das einen zweiten Ölkanalabschnitt (39a, 39b) umfasst, der eine Verbindung zwischen dem Vorratsbehälter (38) und der zweiten Ölkammer (31b) ermöglicht,
wobei der Kolben (32) mit einem Langlochabschnitt (32b) hergestellt wird, der ausgebildet ist, um das zylindrisch geformte Element (39) aufzunehmen, und
wobei eine Seite des Langlochabschnittes (32b) ausgebildet ist, um mit dem zylindrisch geformten Element (39) in Eingriff zu kommen, wenn der Kolben (32) nicht in Richtung der ersten Ölkammer (31a) des Zylinderabschnittes (31) bewegt wird.

10. Baugruppe nach Anspruch 8 oder 9 oder eine Baugruppe, die einen hydraulischen Hauptzylinder (30) nach einem der Ansprüche 1 bis 7 aufweist, wobei der hydraulische Hauptzylinder (30) außerdem aufweist:
ein Ventilelement (34), das im ersten Ölkanalabschnitt (32a) des Kolbens (32) montiert und ausgebildet ist, um eine Seite des ersten Ölkanalabschnittes (32a) in Richtung der ersten Ölkammer (31a) zu verschließen, wenn der Kolben (32) in Richtung der ersten Ölkammer (31a) bewegt wird; und
ein drittes Vorspannelement (40), das ausgebildet ist, um das Ventilelement (34) in Richtung der zweiten Ölkammer (31b) vorzuspannen, um so eine Seite des ersten Ölkanalabschnittes (32a) in Richtung der ersten Ölkammer (31a) zu verschließen, wenn der Kolben (32) in Richtung der ersten Ölkammer (31a) bewegt wird.

11. Baugruppe nach Anspruch 10, wenn er vom Anspruch 8 abhängig ist, bei der der hydraulische Hauptzylinder (30) außerdem aufweist:
ein zylindrisch geformtes Element (39), das in der zweiten Ölkammer (31b) des Zylinderabschnittes (31) vorhanden ist und einen zweiten Ölkanalabschnitt (39a, 39b) umfasst, der eine Verbindung zwischen dem Vorratsbehälter (38) und der zweiten Ölkammer (31b) ermöglicht; und
wobei das Ventilelement (34) einen Stoßabschnitt (34a) umfasst, der ausgebildet ist, um an das zylindrisch geformte Element (39) anzustoßen, wenn der Kolben (32) nicht in Richtung der ersten Ölkammer (31 a) bewegt wird, und wenn das Schubelement (42) mit dem Kolben (32) in Eingriff kommt, und so konstruiert ist, dass eine Seite des ersten Ölkanalabschnittes (32a) in Richtung der ersten Ölkammer (31a) nicht verschlossen wird.

12. Baugruppe nach Anspruch 8 oder einem der Ansprüche 9 bis 11, wenn sie vom Anspruch 8 abhängig sind, wobei die Baugruppe außerdem einen Bremsabschnitt (19) aufweist und der Zylinderabschnitt (31) des hydraulischen Hauptzylinders (30) eine erste Ölkanalöffnung (31c), die eine Verbindung zwischen der ersten Ölkammer (31a) des Zylinderabschnittes (31) und einem Bremsabschnitt (19) bewirkt, und eine zweite Ölkanalöffnung (31d) umfasst, die eine Verbindung zwischen der zweiten Ölkammer (31b) des Zylinderabschnittes (31) und dem Vorratsbehälter (38) bewirkt, und
die außerdem aufweist:
einen ersten Filter (248a), der in der ersten Ölkanalöffnung (31c) vorhanden ist; und
einen zweiten Filter (248b), der in der zweiten Ölkanalöffnung (31d) vorhanden ist.

13. Baugruppe nach Anspruch 12, bei der der Bremsabschnitt (19) mit der ersten Ölkanalöffnung (31c), in der der erste Filter (248a) vorhanden ist, mittels einer Bremskraftsteueranlage (249) verbunden ist, die ausgebildet ist, um eine Lenkbarkeit zum Zeitpunkt des schnellen Bremsens zu sichern.

14. Hydraulischer Hauptzylinder (30) nach einem der Ansprüche 1 bis 7 oder Baugruppe nach einem der Ansprüche 8 bis 13, ausgebildet, um das Bremsen eines Motorrades (1) zu steuern.

15. Fahrzeug (1), das einen hydraulischen Hauptzylinder (30) nach einem der Ansprüche 1 bis 7 oder eine Baugruppe nach einem der Ansprüche 8 bis 13 aufweist.

## Revendications

1. Maître-cylindre hydraulique (30), comprenant :
une partie de cylindre (31), englobant une première chambre à huile (31a) et une deuxième chambre à huile (31b) ;
un piston (32), englobant une première partie de passage d'huile (32a), connectée aux première et deuxième chambres à huile (31a, 31b) ;
un élément de poussée (42), s'engageant dans le piston (32) et adapté pour déplacer ledit piston (32) afin de produire une pression hydraulique dans la première chambre à huile (31a) ;
un premier élément de sollicitation (43), adapté pour pousser l'élément de poussée (42) vers le piston (32), afin d'engager l'élément de poussée (42) dans le piston (32) ; et
un élément de support (44), adapté pour supporter le premier élément de sollicitation (43), l'élément de support (44) étant fixé sur la partie de cylindre (31).

2. Maître-cylindre hydraulique (30) selon la revendication 1, dans lequel :
le premier élément de sollicitation (43) comprend un élément de ressort ;
l'élément de poussée (42) englobe une partie de bride (42b), adaptée pour s'engager dans l'élément de ressort ;
l'élément de support (44) englobe une partie de support (44a), adaptée pour supporter l'élément de ressort ; et
l'élément de ressort est agencé entre la partie de support (44a) de l'élément de support (44) et la partie de bride (42b) de l'élément de poussée (42).

3. Maître-cylindre hydraulique (30) selon la revendication 2, dans lequel l'élément de support (44) définit un trou d'insertion (44c), adapté pour recevoir la partie de bride (42b) de l'élément de poussée (42).

4. Maître-cylindre hydraulique (30) selon la revendication 3, dans lequel :
un premier diamètre extérieur (D1) d'une extrémité (43a) de l'élément de ressort est formé de sorte à être inférieur à un diamètre extérieur (D2) de la partie de bride (42b) de l'élément de poussée (42) ; et
un deuxième diamètre extérieur (D3) de l'autre extrémité (43b) de l'élément de ressort est formé de sorte à être supérieur à un diamètre de trou (D4) du trou d'insertion (44c) de l'élément de support (44).

5. Maître-cylindre hydraulique (30) selon les revendications 2, 3 ou 4, dans lequel l'élément de ressort comprend un ressort de compression.

6. Maître-cylindre hydraulique (30) selon l'une quelconque des revendications précédentes, comprenant en outre un élément de vis (45), adapté pour fixer l'élément de support (44) sur la partie de cylindre (31), l'élément de support (44) comprenant une plaque de retenue définissant un trou de montage (44b) adapté pour recevoir l'élément de vis (45).

7. Maître-cylindre hydraulique (30) selon l'une quelconque des revendications précédentes, comprenant en outre un deuxième élément de sollicitation (33), monté dans la première chambre à huile (31a) de la partie de cylindre (31) et adapté pour pousser le piston (32) vers la deuxième chambre à huile (31b), la force de poussée du deuxième élément de sollicitation (33) étant supérieure à la force de poussée du premier élément de sollicitation (43).

8. Assemblage, comprenant un maître-cylindre hydraulique (30) selon l'une quelconque des revendications précédentes, et comprenant en outre une cuve de réservoir, (38) connectée à la deuxième chambre à huile (31b) de la partie de cylindre (31).

9. Assemblage selon la revendication 8, dans lequel le maître-cylindre hydraulique (30) comprend en outre :
un élément de forme cylindrique (39), englobant une deuxième partie de passage d'huile (39a, 39b), permettant l'établissement d'une communication entre la cuve de réservoir (38) et la deuxième chambre à huile (31b) ;
le piston (32) comportant une partie de trou allongée (32b), adaptée pour recevoir l'élément de forme cylindrique (39) ; et
un côté de la partie de trou allongée (32b) étant adaptée pour s'engager dans l'élément de forme cylindrique (39) lorsque le piston (32) n'est pas déplacé vers la première chambre à huile (31a) de la partie de cylindre (31).

10. Assemblage selon les revendications 8 ou 9, ou assemblage comprenant un maître-cylindre hydraulique (30) selon l'une quelconque des revendications 1 à 7, dans lequel le maître-cylindre hydraulique (30) comprend en outre :
un élément de soupape (34), monté dans la première partie du passage d'huile (32a) du piston (32) et adapté pour fermer un côté de la première partie du passage d'huile (32a) menant vers la première chambre à huile (31a) lorsque le piston (32) est déplacé vers la première chambre à huile (31a) ; et
un troisième élément de sollicitation (40), adapté pour pousser l'élément de soupape (34) vers la deuxième chambre à huile (31b), de sorte à fermer un côté de la première partie du passage d'huile (32a) menant vers la première chambre à huile (31a) lorsque le piston (32) est déplacé vers la première chambre à huile (31a).

11. Assemblage selon la revendication 10, dépendant de la revendication 8, dans lequel le maître-cylindre hydraulique (30) comprend en outre :
un élément de forme cylindrique (39), agencé dans la deuxième chambre à huile (31b) de la partie de cylindre (31) et englobant une deuxième partie de passage d'huile (39a, 39b) permettant l'établissement d'une communication entre la cuve de réservoir (38) et la deuxième chambre à huile (31b) ; et
l'élément de soupape (34) englobant une partie à butée (34a), adaptée pour buter contre l'élément de forme cylindrique (39) lorsque le piston (32) n'est pas déplacé vers la première chambre à huile (31a) et lorsque l'élément de poussée (42) s'engage dans le piston (32), et construite de sorte à ne pas fermer un côté de la première partie de passage d'huile (32a) menant vers la première chambre à huile (31a).

12. Assemblage selon la revendication 8 ou selon l'une quelconque des revendications 9 à 11, dépendant de la revendication 8, dans lequel l'assemblage comprend en outre une partie de freinage (19), la partie de cylindre (31) du maître-cylindre hydraulique (30) englobant un premier orifice du passage d'huile (31c), établissant une connexion entre la première chambre à huile (31a) de la partie de cylindre (31) et une partie de freinage (19), et un deuxième orifice du passage d'huile (31d), établissant une connexion entre la deuxième chambre à huile (31b) de la partie de cylindre (31) et la cuve de réservoir (38) ; et
comprenant en outre
un premier filtre (248a), agencé sur le premier orifice du passage d'huile (31c) ; et
un deuxième filtre (248b), agencé sur le deuxième orifice du passage d'huile (31d).

13. Assemblage selon la revendication 12, dans lequel la partie de freinage (19) est connectée au premier orifice du passage d'huile (31c), sur lequel est agencé le premier filtre (248a), par l'intermédiaire d'une unité de commande de la force de freinage (249), adaptée pour assurer le pouvoir de direction lors d'un freinage rapide.

14. Maître-cylindre hydraulique (30) selon l'une quelconque des revendications 1 à 7, ou assemblage selon l'une quelconque des revendications 8 à 13, configuré de sorte à contrôler le freinage d'un motocycle (1).

15. Véhicule (1), comprenant un maître-cylindre hydraulique (30) selon l'une quelconque des revendications 1 à 7, ou un assemblage selon l'une quelconque des revendications 8 à 13.
